**Europäisches Patentamt**

**European Patent Office**

**Office européen des brevets**

(11) Publication number: **0 127 960 B1**

(12) **EUROPEAN PATENT SPECIFICATION**

(45) Date of publication of patent specification: **15.04.87**

(51) Int. Cl.⁴: $C 04 B 28/18$, $C 04 B 24/38$

(21) Application number: **84303118.8**

(22) Date of filing: **09.05.84**

(54) A process for the manufacture of autoclaved fibre-reinforced shaped articles.

(30) Priority: **10.05.83 DK 2068/83**

(43) Date of publication of application:
**12.12.84 Bulletin 84/50**

(45) Publication of the grant of the patent:
**15.04.87 Bulletin 87/16**

(84) Designated Contracting States:
**AT BE CH DE FR GB LI NL SE**

(56) References cited:
**EP-A-0 068 741
DE-A-2 354 485
FR-A-2 364 872
GB-A-2 114 109
US-A-4 101 335**

(73) Proprietor: **Dansk Eternit-Fabrik A/S
Sohngaardsholmsvej 2 P.O. Box 763
DK-9100 Aalborg (DK)**

(72) Inventor: **Gregersen, Jens Christian
2 Sohngardsholmvej
DK-9100, Aalborg (DK)**

(74) Representative: **Robinson, Anthony John
Metcalf et al
Kilburn & Strode 30 John Street
London, WC1N 2DD (GB)**

# 0 127 960

**Description**

The present invention relates to a process for the manufacture of autoclaved fibre-reinforced shaped articles having a density of at least 600 kg per $m^3$ with a matrix of cured calcium silicate binder, comprising the steps of initially preparing an aqueous slurry of fibres, silica, lime and/or lime-containing material and possibly other additives and containing an excess of water in relation to the amount necessary to secure curing of the calcium silicate binder, and subsequently forming green shaped articles by dewatering the slurry, and finally autoclaving the green shaped articles, possibly after pressing and precuring.

By the term "lime" is meant CaO and/or $Ca(OH)_2$. By "lime-containing material" is understood material which contains lime, and material which liberates lime in the presence of water such as cement, in particular hydraulic cement, e.g. Portland cement. By "autoclaving" is meant heat treatment in the presence of saturated steam at superatmospheric pressure.

Processes of this kind are known in connection with the manufacture of asbestos fibre-reinforced autoclaved products, such as flat or corrugated panels, sheets and boards used for e.g. roofing and exterior and interior cladding of buildings. A typical example is mentioned in US—A—3 501 323, which mentions a typical mixture of 15 weight percent asbestos fibres, 51 weight percent Portland cement (as lime-containing material) and 34 weight percent ground sand (as silica). A free-flowing aqueous slurry is prepared from this mixture, whereafter green sheets are prepared by dewatering said slurry. These sheets are pressed and autoclaved, typically at 170°C for 8 hours.

Similar processes using hydrated lime, Portland cement or mixtures thereof as lime and/or lime-containing material; ground quartz, silica sand, diatomite or fly ash as silica, typically having a specific surface area within the range 1000—12000 $cm^2/g$, preferably within the range 3000—5000 $cm^2/g$; and fibres of asbestos, silica, glass, cellulose and/or organic polymers, are also mentioned in US—A—3 501 323.

Another process of the same kind for the production of asbestos-free products using e.g. 12 weight percent cellulose fibers, 15 weight percent Portland cement, 31.8 weight percent lime, 29.2 weight percent ground quartz and 12 weight percent mica is known from the specification of US—A—4 101 335, and a similar process using 40—60 weight percent cement, 30—40 weight percent ground quartz and 5—15 weight percent cellulose fibres is also known from the specification of EP—A—68741.

The object of the present invention consists in providing a process of the above kind for the manufacture of products, such as flat or corrugated panels, sheets and boards used e.g. for roofing and exterior and interior cladding of buildings and as interior building elements in ships, having a particularly high strength relative to their density, low permeability, high frost resistance and high flexibility.

It has now surprisingly been found that the object can be achieved by a process for the manufacture of autoclaved fibre-reinforced shaped articles having a density of at least 600 kg per $m^3$ with a matrix of cured calcium silicate binder comprising the steps of initially preparing an aqueous slurry of fibres, silica, lime and/or lime-containing material and possibly other additives and containing an excess of water in relation to the amount necessary to secure curing of the calcium silicate binder, and subsequently forming green shaped articles by dewatering the slurry, and finally autoclaving the green shaped articles, possibly after pressing and precuring, which is characterized in that the aqueous slurry, calculated on a dry weight basis, contains

5—30%, preferably 8—20%, in particular 12—16% fibres, including at least 5% preferably at least 8% cellulose fibres;

15—50%, preferably 18—35%, in particular 18—25% silica in the form of ultra fine silica dust with a specific surface area of 5—200 $m^2/g$ and a particle average diameter less than about 0.5 μm; 20—80%, preferably 30—70%, in particular 45—65% lime and/or lime containing material; and 0—40% additives.

The shaped articles formed by the process according to the invention exhibit particularly high strengths relative to their density. This is probably due partly to the unusually high fibre content and partly to the fact that the use of the ultra fine silica dust having an extremely high specific surface area as silica leads to an unusually high reactivity of the starting material and also to a particularly dense packing of the starting material in the green sheets, resulting in a matrix in the autoclaved product which is unusually compact as compared with a matrix obtained by use of coarser silica, such as diatomite or ground quartz. The high reactivity of the starting material also offers the possibility of performing autoclaving at low temperatures, if desired.

The high concentration of fibres, including at least 5%, preferably at least 8% cellulose fibres is of crucial importance to ensure fair filtration conditions and high homogeneity of the green shaped articles, which is necessary for the production of a satisfactory end product.

By the process according to the invention it is thus possible to manufacture flat boards with a MOR (defined below) of 20—60 MPa at densities of 0.9—1.6 $g/cm^3$.

Preferred fibres are: synthetic inorganic fibres, such as mineral wool, glass, carbon and steel fibres; synthetic organic fibres, such as polyester, polyvinyl, polyvinylalcohol, polyethylene, polypropylene, polyacrylonitrile and polyacrylamide fibres; and natural organic fibres, such as cellulose fibres.

As mentioned above, the aqueous slurry must contain at least 5%, preferably at least 8%, calculated on a dry weight basis, cellulose fibres. These are preferably selected from: wood fibres of e.g. birch, pine and spruce; seed and fruit hair fibres of e.g. coir and cotton; and leaf and/or bast fibres of e.g. sisal, abaca, flax, hemp and jute.

2

The fibres serve partly to reinforce the autoclaved product, partly as filtration and retention aids at the dewatering step.

Particularly satisfactory filtration and retention are obtained when at least a part of the cellulose fibres is refined to a degree of freeness of 20—60° SR and/or when the fibres include highly fibrillated polyethylene or polypropylene fibres.

Very favourable results can be obtained if the fibres are exclusively cellulose fibres.

A particularly preferred embodiment is characterized in that the aqueous slurry, calculated on a dry weight basis, contains 8—20, preferably 12—16% cellulose fibres, and that up to 50% of these cellulose fibres are refined to a degree of freeness of 20—60° SR, particularly 35—50° SR.

The ultra fine silica dust is preferably fine filter dust from electrothermal production of silicon or ferro-silicon with a specific surface area of about 25 m²/g and an average particle diameter of about 0.1 μm.

The lime and/or lime-containing material may be hydrated lime, hydraulic cement such as Portland cement, e.g. of the type I—V, according to ASTM standard C150, and mixtures thereof.

The addivies (if present) may be selected from: fillers including mica, vermiculite, kieselgur, perlite, expanded clay, diatomite and ground quartz, silica sand and fly ash; colouring agents; water sealing agents; setting and hardening accelerators including calcium chloride and aluminium sulphate; flocculants and dispersants; filtering agents including acicular Wollastonite crystals; and organic and inorganic plasticising and fibre dispersion agents, including colloidal hydrophilic inorganic particles, e.g. hydrophilic silica particles with a specific surface area larger than 100 m²/g and refined and unrefined colloidal clay particles.

The autoclaving is preferably performed at temperatures between 100 and 240°C, preferably within the interval 130—190°C.

The aqueous slurry can be prepared in a manner known per se by pulping and stirring the fibres in water and subsequently admixing the remaining materials, possibly adding more water to reach a suitable water/solid ratio.

When pulping cellulose fibres it has, however, been found particularly advantageous initially to disperse the ultra fine silica dust in water having a pH-value exceeding 8, subsequently stirring the fibres in this aqueous silica dispersion and finally admixing the remaining materials and, if necessary, additional water. Hereby is ensured a particularly homogeneous slurry of the fibres with a reduced tendency to lump formation, presumably because the ultra fine silica dust in a basic environment will coat the surface of the individual cellulose fibres, providing an increased dispersibility of the cellulose fibres.

The preparation of the green shaped articles by dewatering the slurry takes place in a manner, known per se, e.g. using the Hatschek, Magnani, Head Box, injection or Fourdrinier method.

The green shaped articles can, for example, be shaped as beams, blocks, pipes and flat or corrugated panels, boards and sheets which, if desired, can be subjected to comression, typically at a pressure of 10—100 kgf/cm², and precuring, typically at 20—100°C for 6—24 hours and a relative humidity of 60—100%, before the autoclaving.

When shaping the green shaped articles plasticity is a particularly desirable property. It has been found that excellent plasticity is obtained by the process according to the invention due to the use of the ultra fine silica dust as silica, and that the plasticity of the material increases with addition of lime.

The invention is further illustrated in the Examples.

The materials used in the examples were as follows:—

Fibres:

| AO cellulose | Cellulose fibres (Pinus) (Kraft cellulose), length: less than 4 mm, diameter: about 35 μm. |
| BO cellulose: | Bleached cellulose fibres (Betula) having a degree of freeness about 43—50° SR, length: about 1.3 mm, diameter: about 30 μm. |
| EO cellulose: | Bleached cellulose fibres (Eucalyptus grandis and Eucalyptus urophylla) having a degree of freeness of about 20° SR, length: about 1.0 mm, diameter: about 20 μm. |
| Abaca: | Cellulose fibres (Musa), length: about 6 mm, diameter: about 30 μm. |
| Flax: | Cellulose fibres (Linum) having a degree of freeness of about 35°C SR, length: about 6 mm, diameter: about 15 μm. |

Silica:

| ACE sand: | Silica sand containing at least 90% $SiO_2$, specific surface (Blaine): about 3000 cm²/g. |
| Silica dust: | Ultra fine filter dust from electro-thermal production of metallic silicon or ferrosilicon, $SiO_2$-content: 80—100%, specific surface (BET): about 25 m²/g, average particle diameter: about 0.1. |
| Fly ash: | Fly ash from power plant, specific surface (Blaine): about 3500 cm²/g. |

Lime/lime-containing material

| Hydrated lime: | 95% CaO, average particle size about 5, specific surface (BET): about 15 m²/g. |
| E cement: | A special coarse Portland cement, specific surface (Blaine) about 2600 cm²/g. |
| LSC cement: | A sulphate-resistant Portland cement having a low alkali content (max. 0.60%) (type V), specific surface (Blaine): about 3000 cm²/g, $C_3A$ content: about 1.5%. |

White cement: A low-alkali white Portland cement, specific surface (Blaine): about 440 cm²/g. C₃A content: about 3%.

Additives:

Attagel 150: A commercial colloidal, acicular attapulgus clay product, specific surface: 210 m²/g.

NYAD G: Acicular Wollastonite crystals, 80% having a size corresponding to a spherical diameter less than 4µm, and 20% having a size corresponding to a spherical diameter less than 1 µm.

Attagel and NYAD are Trade Marks.

Fibre reinforced sheets were prepared in the laboratory at bench scale and on Hatschek and Magnani machines at full industrial scale.

Bench scale experiments:

Production procedure.

Pulp preparation: A solution saturated at 20°C was prepared of Ca(OH)₂ and CaSO₄ · 2H₂O in deionized water. A portion of this solution together with the desired amount of ultra fine silica dust were introduced into a British Pulp Evaluation Apparatus, and the silica was dispersed for 3 min. at 3000 r.p.m. Then the fibres were added to the dispersion, and the mixture was pulped for 15 min. at 3000 r.p.m.

Slurry preparation: The resulting fibre pulp along with an additional portion of the above saturated solution were transferred to the vessel of a Diaf mixer, and the slurry was prepared by adding a lime and/or lime-containing material and optional additives in an amount corresponding to a weight ratio water to total solid material equal to 10. The resulting mixture was stirred at 4000 r.p.m. for 6 min.

Preparation of green sheets: A portion of the slurry corresponding to 109 g solid material was dewatered in a filtration apparatus, suction pressure 200 mm Hg. The resulting filter cakes were pressed to green sheets in a Johns-Manville sheet forming press.

Preparation of hardened sheets: The green sheets were cured to hardened sheets in the following way: The green sheets were placed on a glass plate and kept in a humidity box for 24 hours, relative humidity: about 95%, temperature 25°C. Thereafter the sheets were autoclaved with a heating up time of 2.5 hours, held for 16 hours and a cooling time of 2.5 hours.

The physical properties of the slurry and the hardened sheets were measured as described below:

Testing procedure:

Filtration time: A portion of slurry corresponding to 109 g of solid material was dewatered in a filtration apparatus at a suction pressure equal to 200 mm Hg. A sudden drop in suction pressure indicates the end of the filtration period. The filtration time is defined as the period of time from start of suction to pressure drop.

Loss of solids: The particle retention properties of the slurry were measured in the following way: 3 times 440 g portions of slurry were dewatered in a filtration apparatus provided with a 40 mesh sieve, suction pressure: 30 mm Hg. The content of solid material in the filtrate was filtered out from the filtrate and the weight thereof determined. Loss of solids is defined as the percentage by weight of solid material in the filtrate compared with total amount of solids.

MOR dry and wet: The autoclaved sheets were subjected to bending tests in which the curvature of the specimens was determined as a function of the load. A ZWICK 1454 testing machine with 4 point load with a support distance of 190 mm and a 35 mm arm of momentum was used. Force/deformation curves were registered. MOR, modulus of rupture, designates the maximum tensile stress in bending at maximum load. Attribution "wet" designates that measurements were made on watersoaked sheets which had been submerged in water for 48 hours, and "dry" designates that measurements were made on sheets which had been dried at 110°C for 48 hours.

Example 1

Comparison between sheets prepared according to the invention and sheets prepared according to the known art

Three series of experiments were performed with production of sheets according to the Production Procedure.

In experiment 1 sheets based on ultra fine silica dust were produced according to the invention. The green sheets were pressed at 15, 100 and 50 kgf/cm² and autoclaved at 140°C, 140°C and 180°C, respectively.

By way of comparison sheets were produced in experiments 2 and 3 according to the known art in which ACE sand and fly ash, respectively, was used as silica. The green sheets were pressed at 50 kgf/cm² and autoclaved at 180°C.

Compositions, calculated in percent by weight of total solid material, and test results are shown in Table I.

It is evident that the sheets produced according to the invention exhibit extremely superior strength properties.

Further, it is seen that the strength properties improve with increasing compression pressure.

Example 2
Incorporation of fly ash as a component in the binder

Seven series of experiments were carried out with production of sheets according to the Production Procedure.

In experiment 4 fly ash-free sheets were produced based on ultra fine silica dust. In experiment 5 part of the ultra fine silica dust was replaced by fly ash, while in experiment 6 there were produced sheets according to the known art in which fly ash exclusively was used as silica.

Compositions, in weight percent calculated on total solid material, compression pressure and test results are shown in Table II. The autoclaving temperature was 140°C.

It is evident that the sheets produced according to the invention exhibit extremely superior strength properties. Further, it is seen that partial replacement of ultra fine silica by fly ash leads to impaired strength properties.

In experiments 7—10 the amount of ultra fine silica dust used in experiment 4 was maintained, whereas the cement was replaced by increasing amounts of fly ash and lime hydrate.

Compositions, compression pressure and test results are shown in Table II. The autoclaving temperature was 140°C.

Comparison of the results of experiments 4 and 7—10 shows that a high silica content ensures excellent strength properties—also when considerable portions of the cement are replaced by fly ash.

It was further observed that the addition of lime hydrate had an advantageous plasticising effect on the green sheets.

Example 3
Addition of various types of cellulose fibres

Three series of experiments were performed with production of sheets according to the invention.

Experiment 11 is identical with experiment 4. In experiments 12 and 13 the fibres used in experiment 11 were replaced by other fibre combinations.

Compositions, in weight percent calculated on total solid material, compression pressure and test results are shown in Table III. The autoclaving temperature was 140°C.

It is evident that the products produced in all the series of experiments have excellent strength properties.

Example 4
Use of various kinds of cement

Three series of experiments were performed with production of sheets according to the invention.

Experiment 14 is identical with experiment 4. In experiments 15 and 16 the LSC cement used in experiment 14 was replaced by other types of cement.

Compositions, in weight percent calculated on total solid material, compression pressure and test results are shown in Table IV. The autoclaving temperature was 140°C.

It is evident that the products produced in all the series of experiments have excellent strength properties.

Example 5
Effect of incorporation of Wollastonite crystals

Two series of experiments were performed with production of sheets according to the invention, experiment 17 without—experiment 18 with addition of Wollastonite crystals.

Compositions, in weight percent calculated on total solid material, compression pressure and test results are shown in Table V. The autoclaving temperature was 140°C.

The test results show that the incorporation of Wollastonite crystals results in considerable reduction in the filtration time and in the solid material loss with substantially unchanged strength properties.

Example 6
The effect of fibre concentration on strength properties

Eight series of experiments were performed with production of sheets according to the Production Procedure.

In experiment 19 sheets were produced with a fibre content of 4%, i.e. lower than the minimum claimed in Claim 1. In experiments 20 and 21 sheets were produced according to the invention with 12 and 15% fibres, respectively. These sheets were pressed at 15 kgf/cm$^2$ and autoclaved at 140°C.

In experiments 22—26 sheets were produced with cellulose fibre contents increasing from 5 to 30%.

Compositions, in weight percent calculated on total solid material, compression pressure, autoclaving temperature and test results are shown in Table VI.

The test results show that a high cellulose fibre content is necessary in order to obtain excellent

5

strength properties (for products having a rather low density) and fair filtration conditions. It is further seen that the optimal cellulose fibre content is within the range 10—20%.

Example 7
Effect of silica concentration on strength properties.
Six series of experiments were performed with production of sheets according to the invention.
In experiments 27—32 sheets were produced with a content of ultra fine silica dust increasing from 20—40%.
Compositions, in weight percent calculated on total solid material, compression pressure, autoclaving temperature and test results are shown in Table VII.
The test results show that a favourable combination of excellent strength properties and acceptable filtration times are obtained when the content of ultra fine silica dust lies within the range 18—35%.

Industrial experiments.
Example 8
Experiment on a full scale Hatscheck machine
Experiment H1
178 kg BO cellulose were pulped for 10 min. with 3200 litres of water in a 6 m³ Solvo hydro pulper. The resulting pulp was refined in a Black Clawson disc refiner to a degree of freeness of 45° SR. 550 kg ultra fine silica dust were dispersed in 4000 litres of water for 10 min. Thereafter 204 kg AO cellulose were added, and the mixture was pulped for 20 min. 4754 kg of this pulp were mixed with the first pulp and further water was added to a total weight of 8600 kg. 1845 kg of the resulting pulp were mixed with 300 kg LSC cement for 10 min. Thereafter water was added in order to obtain a water to solid material ratio equal to amount 10.
The resulting slurry was in a known manner processed into flat boards on a Hatschek machine.
The flat boards were pressed for 45—60 min.
The pressed boards which had a thickness of 6 mm were cured in a curing channel at 60°C for 8 hours.
Then the boards were autoclaved at 140°C for 16 hours, preceded by a heating up time of 4 hours and followed by a cooling time of 4 hours.

Testing
Two values of the MOR of the boards were measured:
MOR 1 (with rupture parallel to the direction of production).
MOR t (with rupture perpendicular to the direction of production).
The designations "wet" and "dry" are the same as stated above, "stock" refers to the fact that the boards after the autoclaving have been conditioned for about 1 month under atmospheric conditions prior to measurement.
Compositions, in weight percent calculated on total solid material, compression pressure and test results are shown in Table VIII.

Experiment H2
Analogously sheets according to the invention were prepared with a binder based on hydrated lime.
Composition, in weight percent calculated on total solid material, compression pressure and test results are shown in Table VIII.
The boards were tested for water permeability, and the results demonstrated a reduction in permeability by a factor of approximately 10 compared with ordinary asbestos cement. Further the boards were subjected to frost/thaw tests and here again the results were significantly better than for ordinary asbestos cement. After exposure for 1 hour in water and subsequently 23 hours at 60°C dry heat with 50 repetitions the strength properties of the boards remained unchanged. The ability of the boards to protect flammable material behind them against fire was demonstrated as being equal to that of asbestos cement.

Experiment H3 and H4
Analogously sheets according to the invention were prepared with binders based on LSC cement containing flax cellulose and AO cellulose, respectively.
Compositions, in weight percent calculated on total solid materials, composition pressure and test results appear from Table VIII.

Experiment H5
Corrugated sheets were produced at full industrial scale in the following way: A slurry having the same composition as in Experiment H4 was prepared and processed into flat boards on a Hatschek machine as described in Experiment H1. The flat boards were subsequently corrugated in a conventional corrugation machine producing corrugated boards having a pitch (i.e. wave length) of 177 mm and a height (i.e. distance from upper part of wave trough to upper part of wave crest) of 51 mm (plate thickness 6 mm).
The boards were cured and autoclaved as described in Experiment H1. Some boards were pressed for 45—60 min. at 100 kgf/cm² before curing.
Test coupons were cut from the autoclaved boards and two values for the modulus of rupture were

6

measured for each coupon, namely MOR 1 (with rupture parallel to the corrugations) and MOR t (with rupture perpendicular to the corrugations). The designations "1", "t", "wet" and "stock" are the same as stated above. The following test results were found:

Unpressed boards: Density: 1.04 g/cm$^3$; MOR 1 wet: 7.6 MPa; MOR t wet: 10.7 MPa; MOR 1 stock: 12.1 MPa; MOR t stock 16.8 MPa.

Pressed boards: Density: 1.34 g/cm$^3$; MOR 1 wet: 12.6 MPa; MOR t wet: 17.8 MPa; MOR 1 stock 27.4 MPa, MOR t stock: 29.4 MPa.

The boards exhibited excellent frost resistance and water-tightness.

Example 9

Experiment on a full scale Magnani machine

An aqueous slurry having a water/solid ratio equal to about 2 and containing 12 parts by weight cellulose fibres, 20 parts by weight ultra fine silica dust, 16 parts by weight fly ash and 52 parts by weight LSC cement was prepared as described in Example 8.

The slurry was pumped into a Magnani machine where it was dewatered to corrugated boards (pitch: 147 mm, height: 48 mm, thickness: 6—7 mm). The unpressed boards were cured and autoclaved as described in Example 8.

Test coupons were cut from the autoclaved boards and two values of the modulus of rupture were measured for each coupon, namely MOR 1 and MOR t. The designations "1", "t", "wet" and "stock" are as defined in Experiment H5. The following test results were found:

Density within the range 1.04—1.13 g/cm$^3$; MOR 1 wet within the range 7.5—12 MPa; MOR t wet within the range 9—14 MPa; MOR 1 stock within the range 13—20 MPa; MOR t stock within the range 16—22 MPa.

It is seen that excellent strength properties are obtained with varying cellulose fibre combinations.

TABLE I

| Experiment No. | 1 | 2 | 3 |
|---|---|---|---|
| AO cellulose | 3.3 | 3.3 | 3.0 |
| BO cellulose | 6.7 | 6.7 | 5.0 |
| ACE sand | — | 30.3 | — |
| Fly ash | — | — | 31.0 |
| Silica dust | 30.3 | — | — |
| Hydrated lime | 28.1 | 28.1 | 28.7 |
| Attagel 150 | 2.0 | 2.0 | 2.0 |
| Nyad G | 29.6 | 29.6 | 30.3 |
| Filtration time (sec.) | 815 | 34 | 27 |
| Solid material loss (%) | 2.9 | 2.9 | 3.0 |
| Compression pressure: 15 kgf/cm$^2$ | | | |
| Density (g/cm$^3$ | 1.00 | — | — |
| MOR wet, (MPa) | 13.1 | — | — |
| MOR dry, (MPa) | 20.6 | — | — |
| Compression pressure: 100 kgf/cm$^2$ | | | |
| Density (g/cm$^3$) | 1.23 | — | — |
| MOR wet, (MPa) | 18.0 | — | — |
| MOR dry, (MPa) | 31.3 | — | — |
| Compression pressure: 50 kgf/cm$^2$ | | | |
| Density (g/cm$^3$) | 1.14 | 1.06 | 1.02 |
| MOR dry, (MPa) | 25.8 | 9.6 | 3.4 |

TABLE II

| Experiment No. | 4 | 5 | 6 |
|---|---|---|---|
| AO cellulose | 8 | 8 | 8 |
| BO cellulose | 7 | 7 | 7 |
| Fly ash | — | 9 | 24 |
| Silica dust | 24 | 15 | — |
| LSC cement | 61 | 61 | 61 |
| Filtration time (sec.) | 271 | 115 | 32 |
| Solid material loss (%) | 3.3 | 3.6 | 2.5 |
| Compression pressure: 15 kgf/cm² | | | |
| Density (g/cm³) | 1.21 | 1.19 | 0.95 |
| MOR wet, (MPa) | 22.6 | 16.4 | 6.2 |
| MOR dry, (MPa) | 29.9 | 25.8 | 10.4 |
| Compression pressure: 100 kgf/cm² | | | |
| Density (g/cm³) | 1.45 | 1.39 | 1.09 |
| MOR wet, (MPa) | 33.9 | 24.6 | 9.0 |
| MOR dry, (MPa) | 35.2 | 30.0 | 13.6 |

TABLE II (Cont.)

| Experiment No. | 7 | 8 | 9 | 10 |
|---|---|---|---|---|
| AO cellulose | 8 | 8 | 8 | 8 |
| BO cellulose | 7 | 7 | 7 | 7 |
| Fly ash | 5 | 10 | 15 | 25 |
| Silica dust | 24 | 24 | 24 | 24 |
| Hydrated lime | — | 5 | 8 | 13 |
| LSC cement | 56 | 46 | 38 | 23 |
| Filtration time (sec.) | 263 | 223 | 240 | 234 |
| Solid material loss (%) | 3.8 | 3.5 | 3.9 | 3.5 |
| Compression pressure: 15 kgf/cm² | | | | |
| Density (g/cm³) | 1.22 | 1.14 | 1.10 | 1.01 |
| MOR wet, (MPa) | 19.0 | 18.9 | 17.7 | 15.0 |
| MOR dry, (MPa) | 26.9 | 25.4 | 24.6 | 23.0 |
| Compression pressure: 100 kgf/cm² | | | | |
| Density (g/cm³) | 1.45 | 1.39 | 1.33 | 1.25 |
| MOR wet, (MPa) | 28.6 | 27.1 | 24.9 | 21.7 |
| MOR dry, (MPa) | 32.7 | 33.5 | 34.2 | 27.1 |

TABLE III

| Experiment No. | 11 | 12 | 13 |
|---|---|---|---|
| AO cellulose | 8 | — | 8 |
| BO cellulose | 7 | — | — |
| Abaca | — | 8 | — |
| EO cellulose | — | 7 | 7 |
| Silica dust | 24 | 24 | 24 |
| LSC cement | 61 | 61 | 61 |
| Filtration time (sec.) | 271 | 131 | 174 |
| Solid material loss (%) | 3.3 | 3.6 | 4.1 |
| Compression pressure: 15 kgf/cm² | | | |
| Density (g/cm³) | 1.21 | 1.30 | 1.28 |
| MOR wet, (MPa) | 22.6 | 25.1 | 22.0 |
| MOR dry, (MPa) | 29.9 | 28.8 | 29.8 |
| Compression pressure: 100 kgf/cm² | | | |
| Density (g/cm³) | 1.45 | 1.51 | 1.52 |
| MOR wet, (MPa) | 33.9 | 33.8 | 31.6 |
| MOR dry, (MPa) | 35.2 | 36.9 | 37.9 |

TABLE IV

| Experiment No. | 14 | 15 | 16 |
|---|---|---|---|
| AO cellulose | 8 | 8 | 8 |
| BO cellulose | 7 | 7 | 7 |
| Silica dust | 24 | 24 | 24 |
| LSC cement | 61 | — | — |
| E cement | — | — | 61 |
| White cement | — | 61 | — |
| Filtration time (sec.) | 271 | 259 | 242 |
| Solid material loss (%) | 3.3 | 2.8 | 3.3 |
| Compression pressure: 15 kgf/cm² | | | |
| Density (g/cm³) | 1.21 | 1.19 | 1.20 |
| MOR wet, (MPa) | 22.6 | 17.1 | 21.8 |
| MOR dry, (MPa) | 29.9 | 26.5 | 26.0 |
| Compression pressure: 100 kgf/cm² | | | |
| Density (g/cm³) | 1.45 | 1.46 | 1.45 |
| MOR wet, (MPa) | 33.9 | 23.9 | 29.6 |
| MOR dry, (MPa) | 35.2 | 32.6 | 29.7 |

TABLE V

| Experiment No. | 17 | 18 |
|---|---|---|
| AO cellulose | 8 | 8 |
| BO cellulose | 7 | 7 |
| Silica dust | 24 | 24 |
| E cement | 61 | 51 |
| Nyad G | — | 10 |
| Filtration time (sec.) | 242 | 180 |
| Solid material loss (%) | 3.3 | 2.9 |
| Compression pressure: 15 kgf/cm² | | |
| Density (g/cm³) | 1.20 | 1.19 |
| MOR wet, (MPa) | 21.8 | 20.1 |
| MOR dry, (MPa) | 26.0 | 26.6 |
| Compression pressure: 100 kgf/cm² | | |
| Density (g/cm³) | 1.45 | 1.43 |
| MOR wet, (MPa) | 29.6 | 29.7 |
| MOR dry, (MPa) | 29.7 | 34.9 |

TABLE VI

| Experiment No. | 19 | 20 | 21 |
|---|---|---|---|
| AO cellulose | 4 | 8 | 8 |
| BO cellulose | — | 4 | 7 |
| Silica dust | 24 | 24 | 24 |
| LSC cement | 72 | 64 | 61 |
| Filtration time (sec.) | 1500 | 427 | 271 |
| Solid material loss (%) | — | 4.4 | 3.3 |
| Compression pressure (kgf/cm²) | 15 | 15 | 15 |
| Autoclaving temperature (°C) | 140 | 140 | 140 |
| Density (g/cm³) | 1.55 | 1.31 | 1.21 |
| MOR wet, (MPa) | 13.9 | 18.8 | 22.6 |

TABLE VI (Cont)

| Experiment No. | 22 | 23 | 24 | 25 | 26 |
|---|---|---|---|---|---|
| AO cellulose | 3 | 6 | 9 | 12 | 18 |
| BO cellulose | 2 | 4 | 6 | 8 | 12 |
| Silica dust | 26.8 | 25.4 | 24 | 22.6 | 19.8 |
| LSC cement | 68.2 | 64.6 | 61 | 57.4 | 50.2 |
| Filtration time (sec.) | 549 | 403 | 166 | 124 | 57 |
| Solid material loss (%) | 13.3 | 5.4 | 4.3 | 1.8 | 1.3 |
| Compression pressure (kgf/cm$^2$) | 100 | 100 | 100 | 100 | 100 |
| Autoclaving temperature: 140°C | | | | | |
| Density (g/cm$^3$) | 1.73 | 1.59 | 1.48 | 1.33 | 1.15 |
| MOR wet, (MPa) | 14.6 | 24.5 | 24.2 | 20.6 | 15.8 |
| Autoclaving temperature: 180°C | | | | | |
| Density (g/cm$^3$) | 1.74 | 1.58 | 1.46 | 1.26 | 1.14 |
| MOR wet, (MPa) | 11.4 | 17.8 | 22.8 | 22.6 | 18.8 |

TABLE VII

| Experiment No. | 27 | 28 | 29 | 30 | 31 | 32 |
|---|---|---|---|---|---|---|
| AO cellulose | 8 | 8 | 8 | 8 | 8 | 8 |
| BO cellulose | 7 | 7 | 7 | 7 | 7 | 7 |
| Silica dust | 20 | 24 | 28 | 32 | 36 | 40 |
| LSC cement | 65 | 61 | 57 | 53 | 49 | 45 |
| Filtration time (sec.) | 189 | 221 | 301 | 227 | 302 | 349 |
| Solid material loss (%) | 3.2 | 2.3 | 4.2 | 2.4 | 2.7 | 2.4 |
| Compression pressure (kgf/cm$^2$) | 100 | 100 | 100 | 100 | 100 | 100 |
| Autoclaving temperature: 140°C | | | | | | |
| Density (g/cm$^3$) | 1.45 | 1.48 | 1.49 | 1.41 | 1.39 | 1.35 |
| MOR wet, (MPa) | 23.4 | 24.3 | 28.7 | 27.4 | 25.5 | 24.2 |
| Autoclaving temperature: 180°C | | | | | | |
| Density (g/cm$^3$) | 1.45 | 1.45 | 1.47 | 1.43 | 1.41 | 1.39 |
| MOR wet, (MPa) | 19.1 | 22.3 | 25.6 | 29.1 | 29.2 | 27.5 |

# 0 127 960

TABLE VIII

| Experiment No. | H1 | H2 | H3 | H4 |
|---|---|---|---|---|
| AO cellulose | 8 | 3.2 | — | 6 |
| BO cellulose | 7 | 6.4 | 4 | 4 |
| Flax | — | — | 6 | — |
| Silica dust | 24 | 30.3 | 20 | 20 |
| Hydrated lime | — | 28.1 | — | — |
| LSC cement | 61 | — | 60 | 60 |
| Nyad G | — | 29.6 | 10 | 10 |
| Attagel 150 | — | 2.4 | — | — |
| Compression pressure (kgf/cm$^2$) | 223 | 205 | 190 | 190 |
| Density (g/cm$^3$) | 1.3 | 1.2 | 1.5 | 1.4 |
| MOR 1 wet, (MPa) | 22.5 | 17.2 | 20.4 | 24.4 |
| MOR t wet, (MPa) | 36.0 | 23.9 | 30.1 | 38.2 |
| MOR 1 dry, (MPa) | 26.6 | 26.0 | 27.6 | 33.8 |
| MOR t dry, (MPa) | 44.9 | 40.4 | 34.4 | 47.6 |
| MOR 1 stock, (MPa) | 30.9 | 21.8 | 25.3 | 28.8 |
| MOR t stock, (MPa) | 55.5 | 37.2 | 33.6 | 49.6 |

## Claims

1. A process for the manufacture of autoclaved fibre-reinforced shaped articles having a density of at least 600 kg per m$^3$ with a matrix of cured calcium silicate binder comprising the steps of initially preparing an aqueous slurry of fibres, silica, lime and/or lime-containing material and possibly other additives and containing an excess of water in relation to the amount necessary to secure curing of the calcium silicate binder, and subsequently forming green shaped articles by dewatering the slurry, and finally autoclaving the green shaped articles, possibly after pressing and precuring, characterized in that the aqueous slurry, calculated on a dry weight basis, contains

5—30%, preferably 8—20%, in particular 12—16% fibres, including at least 5%, preferably at least 8%, cellulose fibres;

15—50%, preferably 18—35%, in particular 18—25% silica in the form of ultra fine silica dust with a specific surface area of 5—200 m$^2$/g and a particle average diameter less than about 0.5 µm; 20—80%, preferably 30—70%, in particular 45—65% lime and/or lime-containing material; and 0—40% additives.

2. A process according to Claim 1, characterized in that the fibres are selected from synthetic inorganic fibres, such as mineral wool, glass, carbon and steel fibres; synthetic organic fibres, such as polyester, polyvinyl, polyvinylalcohol, polyethylene, polypropylene, polyacrylonitrile and polyacrylamide fibres; and natural organic fibres, such as cellulose fibres.

3. A process according to Claim 1 or Claim 2 characterized in that the cellulose fibres are selected from wood fibres of e.g. birch, pine and spruce; seed and fruit hair fibres of e.g. coir and cotton; and leaf and/or bast fibres of e.g. sisal, abaca, flax, hemp and jute.

4. A process according to any of Claims 1 to 3 characterized in that at least part of the cellulose fibres are refined to a degree of freeness of 20—60° SR.

5. A process according to any of Claims 1 to 4 characterized in that the fibres include highly fibrillated polyethylene or polypropylene fibres.

6. A process according to any of Claims 1 to 4 characterised in that the fibres are exclusively cellulose fibres.

7. A process according to any of Claims 1 to 6 characterized in that the aqueous slurry, calculated on a dry weight basis, contains 8—20, preferably 12—16% cellulose fibres, and that up to 50% of these cellulose fibres are refined to a degree of freeness of 20—60° SR, particularly 35—50° SR.

8. A process according to any of Claims 1 to 7 characterized in that the ultra fine silica dust is fine filter dust from electrothermal production of silicon or ferrosilicon with a specific surface area of about 25 m$^2$/g and an average particle diameter of about 0.1 µm.

9. A process according to any of Claims 1 to 8 characterized in that the lime and/or lime-containing material is hydrated lime.

10. A process according to any of Claims 1 to 8 characterised in that the lime and/or lime-containing material is Portland cement.

11. A process according to any of Claims 1 to 8 characterised in that the lime and/or lime-containing material is a mixture of Portland cement and hydrated lime.

12. A process according to any of Claims 1 to 11 characterized in that the additives are selected from: fillers including mica, vermiculite, kieselgur, perlite, expanded clay, diatomite and ground quartz, silica sand and fly ash; colouring agents; water sealing agents; setting and hardening accelerators including calcium chloride and aluminium sulphate; flocculants and dispersants; filtering agents including acicular Wollastonite crystals; and organic and inorganic plasticising and fibre dispersion agents, including colloidal hydrophilic inorganic particles, e.g. hydrophilic silica particles with a specific surface area larger than 100 $m^2/g$ and refined and unrefined colloidal clay particles.

13. A process according to any of Claims 1 to 12 characterized in that the autoclaving is performed at temperatures between 100 and 240°C, preferably at 130—190°C.

14. A process according to any of Claims 1 to 13 characterized in that the aqueous slurry is prepared by initially dispersing the ultra fine silica in water having a pH-value exceeding 8, subsequently stirring the fibres in this aqueous silica dispersion and finally admixing the remaining materials and, if desired, additional water.

## Patentansprüche

1. Verfahren zum Herstellen von autoklavierten, faserverstärkten, geformten Gegenständen, welche eine Dichte von wenigstens 600 kg/m³ und eine Grundstruktur aus gehärtetem Kalziumsilikat-Bindemittel aufweisen, dadurch gekennzeichnet dass zuerst ein wässriger Schlamm aus Fasern, Kieselerde, Kalk (CaO und/oder Ca(OH)₂) und/oder kalkhaltigem Material und möglicherweise andern Zusätzen, hergestellt wird, der, bezogen auf die für das Aushärten des Kalziumsilikat-Bindemittels notwendige Menge, einen Wasser-Ueberschuss enthält, dass darauffolgend die Gegenstände vorgeformt werden, indem der Schlamm entwässert wird, und dass schliesslich, nachdem sie möglicherweise gepresst und vorgehärtet wurden, die vorgeformten Gegenstände autoklaviert werden, und dass der wässrige Schlamm, berechnet auf der Grundlage des Trockengewichts,

5—30%, vorzugsweise 8—20%, insbesondere 12—16% Fasern, welche wenigstens 5%, vorzugsweise wenigstens 8% Zellulosefasern,

15—50%, vorzugsweise 18—35%, insbesondere 18—25% Kieselerde in Form von ultrafeinem Staub, mit einer spezifischen Oberfläche von 5—200 m²/g und einem mittleren Durchmesser von weniger als etwa 0.5 μm,

20—80%, vorzugsweise 30—70%, insbesondere 45—65% Kalk oder kalkhaltiges Material,

0—40% Zusätze enthält.

2. Verfahren nach Patentanspruch 1, dadurch gekennzeichnet, dass die Fasern anorganische Fasern wie Mineralwolle-, Glas-, Kohle- und Stahlfasern; synthetische, organische Fasern wie Poyester-, Polyvinyl-, Polyvinylalkohol-, Polyäthylen-, Polypropylen-, Polyacrylnitril- und Polyacrylamid- Fasern; oder natürliche, organische Fasern wie Zellulose-Fasern sind.

3. Verfahren nach Patentanspruch 1 oder 2, dadurch gekennzeichnet, dass die Zellulose-Fasern Holzfasern, von z.B. Birke, Kiefer oder Fichte, Samen-oder Frucht-Fasern von z.B. Kokos oder Baumwolle oder Blattfasern und/oder Bastfasern von z.B. Sisal, Manilahanf, Flachs, Hanf oder Jute sind.

4. Verfahren nach einem der Patentansprüche 1 bis 3, dadurch gekennzeichnet, dass wenigstens eine Teil der Zellulose-Fasern bis zu einem Freiheitsgrad von 20—60° SR verfeinert sind.

5. Verfahren nach einem der Patentansprüche 1 bis 3, dadurch gekennzeichnet, dass die Fasern feinfasrige Polyäthylen- oder Polypropylen-Fasern umfassen.

6. Verfahren nach einem der Patentansprüche 1 bis 4, dadurch gekennzeichnet, dass die Fasern ausschliesslich Zellulose-Fasern sind.

7. Verfahren nach einem der Patentansprüche 1 bis 6, dadurch gekennzeichnet, dass der wässrige Schlamm, berechnet auf der Basis des Trockengewichts, 8—20%, vozugsweise 12—16% Zellulose-Fasern enthält, und dass bis zu 50% dieser Zellulose-Fasern derart verfeinert sind, dass sie einen Freiheitsgrad im Bereich 20—60° SR, insbesondere 35—50° SR aufweisen.

8. Verfahren nach einem der Patentansprüche 1 bis 7, dadurch gekennzeichnet, dass der ultrafeine Kieselerde-Staub, elektrothermischer Feinfilterstaub aus der Produktion von Silizium oder Ferrosilizium, mit einer spezifischen Oberfläche von etwa 25 m²/g und einem mittleren Teilchendurchmesser von etwa 0.1 μm, sind.

9. Verfahren nach einem der Patentansprüche 1 bis 8, dadurch gekennzeichnet, dass der Kalk und/oder das kalkhaltige Material, gelöschter Kalk ist.

10. Verfahren nach einem der Patentansprüche 1 bis 8, dadurch gekennzeichnet, dass der Kalk und/oder das kalkhaltige, Material Portland-Zement ist.

11. Verfahren nach einem der Patentansprüche 1 bis 8, dadurch gekennzeichnet, dass der Kalk und/oder das kalkhaltige Material, ein Gemisch aus Portland-Zement und gelöschtem Kalk ist.

12. Verfahren nach einem der Patentansprüche 1 bis 11, dadurch gekennzeichnet, dass die Zusätze zu folgenden Stoffen gehören: Füllstoffe, welche Glimmer enthalten, Vermikulit, Kieselgur, Perlit, Blähton,

**0 127 960**

Diatomit und gemahlener Quarz, Quarzsand und Flugasche; Farbstoffe; Wasser-Dichtstoffe; Ansetzmittel und Aushärt-Beschleuniger, wie Kalziumchlorid und Aluminiumsulphat; Flock- und Verteil-Mittel; Filtermittel wie nadelförmige Wollastonit-Kristalle, organische und anorganische, weichmachende und faserverteilende Mittel wie hydrophile, anorganische Teilchen, z.B. hydrophile Kieselerde-Teilchen mit einer spezifischen Oberfläche von mehr als 100 m$^2$/g und verfeinerter und unverfeinerter, kolloidaler Ton.

13. Verfahren nach einem der Patentansprüche 1 bis 12, dadurch gekennzeichnet, dass das Autoklvieren bei Temperaturen zwischen 100 und 240°C, vorzugsweise 130—190°C durchgeführt wird.

14. Verfahren nach einem der Patentansprüche 1 bis 13, dadurch gekennzeichnet, dass der wässrige Schlamm so hergestellt wird, dass anfangs die ultrafeine Kieselerde in Wasser mit einem pH-Wert von mehr als 8 verteilt wird, und dass darnach die Fasern in diese wässrige Kieselerde-Dispersion eingerührt werden und schliesslich die übrigen Materialen, und wenn erforderlich, zusätzliches Wasser beigemischt wird.

## Revendications

1. Procédé pour la fabrication en autoclave d'articles formés, renforcés par des fibres, ayant une densité d'au moins 600 kg par m$^3$ et une matrice de liant de silicate de calcium durci, comprenant les étapes suivantes: d'abord on prépare une pâte aqueuse de fibres, de silice, de chaux et/ou de matériau contenant de la chaux, ainsi qu'éventuellement d'autres additifs, ladite pâte contenant davantage d'eau qu'il n'est nécessaire pour assurer la cuisson du liant de silicate de calcium puis on forme des particules crues en enlevant de l'eau à la pâte et, finalement, on passe les particules crues formés à l'autoclave (éventuellement après une opération de pressage et de pré-cuisson), caractérisé en ce que la pâte aqueuse contient sur une base sèche:

5—30%, de préférence 8—20%, ou encore mieux 12—16% de fibres dont au moins 5%, et de préférence au moins 8% sont des fibres de cellulose;

15—50%, de préférence 18—35%, ou encore mieux 18—25% de silice sous la forme de poussière de silice ultra-fine ayant une surface spécifique de 5—200 m$^2$/g et une taille moyenne des particules inférieure à environ 0,5 μm;

20—80%, de préférence 30—70%, ou encore mieux 45—64% de chaux et/ou d'un matériau contenant de la chaux; et

0—40% d'additifs.

2. Procédé selon la revendication 1, caractérisé en ce que les fibres sont choisies parmi les fibres synthétiques minérales telles que la laine minérale, les fibres de verre, de carbone et d'acier; les fibres synthétique organiques telles que les fibres de polyester, de polyvinyl, de polyvinylalcool, de polyéthylène, de polypropylène, de polyacrylonitrile et de polyacrylamide; et les fibres naturelles organiques telles que les fibres de cellulose.

3. Procédé selon la revendication 1 ou la revendication 2, caractérisé en ce que les fibres de cellulose sont choisies parmi les fibres de bois comme par exemple le bouleau, le pin ou l'épicéa; les fibres de grains et de fruits comme par exemple les noix de coco ou le coton; et les fibres de feuilles et/ou d'écorce comme par exemple le sisal, le bananier textile, le lin, le chanvre ou le jute.

4. Procédé selon l'une quelconque des revendications 1 à 3, caractérisé en ce que au moins une partie des fibres de cellulose est raffinée jusqu'à avoir un degré de liberté de 20—60° SR.

5. Procédé selon l'une quelconque des revendications 1 à 4, caractérisé en ce que les fibres comportent des fibres de polyéthylène ou de polypropylène hautement fibrillaires.

6. Procédé selon l'une quelconque des revendications 1 à 4, caractérisé en ce que les fibres sont uniquement des fibres de cellulose.

7. Procédé selon l'une quelconque des revendications 1 à 6, caractérisé en ce que la pâte aqueuse contient sur une base sèche 8—20% et de préférence 12—16% de fibres de cellulose, et jusqu'à 50% de ces fibres de cellulose sont raffinées pour avoir un degré de liberté de 20—60° SR, ou mieux, de 35—50° SR.

8. Procédé selon l'une quelconque des revendications 1 à 7, caractérisé en ce que la poussière de silice ultra-fine est la poussière fine de filtre obtenue dans la fabrication électrochimique de silicium ou de ferrosilicium ayant une surface spécifique d'environ 25 m$^2$/g et un diamètre moyen des particules d'environ 0,1 μm.

9. Procédé selon l'une quelconque des revendications 1 à 8, caractérisé en ce que la chaux et/ou le matériau contenant de la chaux est la chaux hydratée.

10. Procédé selon l'une quelconque des revendications 1 à 8, caractérisé en ce que la chaux ou/et le matériau contenant de la chaux est un ciment de Portland.

11. Procédé selon l'une quelconque des revendications 1 à 8, caractérisé en ce que la chaux et/ou le matériau contenant de la chaux est un mélange de ciment de Portland et de chaux hydratée.

12. Procédé selon l'une quelconque des revendications 1 à 11, caractérisé en ce que les additifs sont choisis parmi: les charges comme le mica, la vermiculite, la terre à diatomées, la perlite, l'argile expansée, la diatomite et le quartz broyés, le sable de silice, la cendre volante; les agents colorants; les hydrofuges; les accélérateurs de prise ou de durcissement comme le chlorure de calcium et le sulfate d'aluminium; les floculants et les dispersants; les agents de filtration comme les cristaux aciculaires de Wollastonite: et les agents dispersants des fibres ainsi que les agents plastifiants minéraux ou organiques comme les particules minérale hydrophobes et colloïdales du type particules de silice ayant une surface spécifique supérieure à 100 m²/g et du type particules d'argile colloïdale non raffinée.

13. Procédé selon l'une quelconque des revendications 1 à 12, caractérisé en ce que le traitement à l'autoclave est effectué à une température comprise entre 100 et 240°C, et de préférence entre 130 et 190°C.

14. Procédé selon l'une quelconque des revendications 1 à 13, caractérisé en ce que la pâte aqueuse est préparée en dispersant d'abord la silice ultra-fine dans une eau ayant un pH excédant 8, puis en agitant les fibres dans cette dispersion aqueuse de silice, et enfin en ajoutant les ingrédients restants et, le cas échéant, de l'eau supplémentaire.